# EUROPEAN PATENT APPLICATION

(11) **EP 4 442 545 A1**
(43) Date of publication of application: **09.10.2024**
(21) Application number: 22900623.4
(22) Date of filing: 01.12.2022
(51) Int. Cl.: B62D 25/24, B60L 53/16, E05C 19/00, E05F 1/12

(54) **DUSTPROOF DEVICE HAVING SELF-LOCKING AND REBOUNDING FUNCTIONS, AND CHARGING DEVICE**

(30) Priority: 01.12.2021 CN 202111453096
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Dehns
(86) International application number: PCT/CN2022/135916
(87) International publication number: WO 2023/098819

(57) **Abstract**

A dustproof device having self-locking and rebounding functions and a charging device, including a dust cover mounting support (2), a dust cover (1), a dust cover fixing mechanism (3), and a dust cover locking mechanism (4), and the dust cover (1) is hinged to the dust cover mounting support (2) through the dust cover fixing mechanism (3), and the dust cover (1) is driven by the dust cover fixing mechanism (3) to rotate to a fastening position; and the dust cover locking mechanism (4) is mounted on the dust cover mounting support (2), and the dust cover locking mechanism (4) is in snap connection to the dust cover (1) to enable the dust cover (1) to be in an open position and to prevent the dust cover (1) from rotating to the fastening position. The dust cover is driven by using a spring without manual fastening, and the dust cover can be self-locked at the open position, so that a charging gun head is easily inserted into a charging socket port. The dust cover can be unlocked through the charging gun head and is automatically fastened after the charging gun head is pulled out. Alternatively, the dust cover can be manually opened to an unlocking position, so that the dust cover rebounds automatically and is fastened at the charging socket port.

## Description

### RELATED APPLICATION

The present disclosure claims priority to Chinese Patent Application No. 202111453096.3, filed on December, 1, 2021, which is hereby incorporated by reference in its entirety.

### TECHNICAL FIELD

The present disclosure relates to the technical field of electricity, and particularly relates to a dustproof device with self-locking and rebounding functions, and a charging device.

### BACKGROUND

Some of the existing electrical appliances are used outdoors. Correspondingly, a common live socket is equipped with a waterproof and dustproof cover, for example, a charging socket port of an electric automobile, so a dust cover is needed for a waterproof and dustproof purpose of a charging socket. At present, the dust cover of the charging socket achieves the waterproof function and dustproof function by means close fit between the charging socket port and the dust cover. Before charging, the dust cover needs to be taken down manually. After charging, the dust cover needs to be fastened to the charging socket port manually. To guarantee the waterproof purpose and dustproof purpose of the dust cover and the charging socket port, the two are in close fit. Regardless of taking down or fastening the dust cover, an operator needs to exert a huge force. In the fastening process, the operator also needs to align the matching positions between the dust cover and the charging socket port carefully, which is difficult to operate, timewasting and labor-wasting. The comfort level of a user of the automobile is reduced.

Besides, the existing dust cover is connected to the charging socket with a connecting rope. The position of the dust cover is not fixed after it is taken down, and the operator needs to seek for, take, and confirm the fastening direction, which wastes time. The connecting rope of the dust cover will also be worn during long-term use to be broken, resulting in missing of the dust cover, so that the waterproof and dustproof purposes for the charging socket cannot be achieved.

Therefore, it is an urgent need for a dustproof device capable of being self-locked after being opened and rebounding automatically after a plug is pulled out in the technical field of electricity.

### SUMMARY

An object of the present disclosure is to provide a dustproof device having self-locking and rebounding functions and a charging device using the dust cover. The dust cover is fastened to a charging socket port by a spring, is self-locked after being manually opened, and is automatically fastened after a charging gun head is pulled out.

In the present disclosure, the dust cover is driven by using a spring without manual fastening, and the dustproof device can be self-locked at the open position, so that the charging gun head is easily inserted into a charging socket port. The dust cover can be unlocked through the charging gun head and is automatically fastened after the charging gun head is pulled out. Alternatively, the dust cover can be manually opened to an unlocking position, so that the dust cover rebounds automatically and is fastened at the charging socket port.

The object of the present disclosure can be realized by the following technical solution:

An embodiment in a first aspect of the present disclosure provides a dustproof device having self-locking and rebounding functions, including a dust cover mounting support, a dust cover, a dust cover fixing mechanism, and a dust cover locking mechanism, in which the dust cover is connected to the dust cover mounting support through the dust cover fixing mechanism, and the dust cover is driven by the dust cover fixing mechanism to rotate to a fastening position; and the dust cover locking mechanism is mounted on the dust cover mounting support, and the dust cover locking mechanism is in snap connection to the dust cover to enable the dust cover to be in an open position, and to prevent the dust cover from rotating to the fastening position.

An embodiment in a second aspect of the present disclosure provides a charging device, including a charging socket body, a charging gun head, and the dustproof device having self-locking and rebounding functions described above, in which a charging socket port is provided on the charging socket body; the charging gun head is in fit plug connection to the charging socket port; a dust cover is fixed on the charging socket body; and in a fastening position, the dust cover covers the charging socket port.

The present disclosure has the following features and advantages:
1. The dustproof device provided by the present disclosure is connected to the dust cover mounting support through a hinged shaft to avoid the uncertain position of the dust cover as a result of use of a connecting rope of the dust cover or the missing of the dust cover, so that the waterproof function and dustproof function of the dust cover can be better guaranteed.
2. In the present disclosure, the dust cover is driven by using the spring without manual fastening, and the dustproof device can be self-locked at the open position as the locking groove is in snap connection to the locking claw, so that the charging gun head is easily inserted into the charging socket port.
3. The unlocking support arm is provided on the locking claw in the present disclosure, the unlocking support arm can be touched when the charging gun head is inserted, so that the locking claw is separated from the locking groove, and when the charging gun head is pulled out, the dust cover is automatically closed.

When there is no charging gun head inserted, the dust cover can be rotated continuously, so that the unlocking cam pushes the locking claw to be separated from the locking groove, and the dust cover is automatically closed under the action of the first spring.

### BRIEF DESCRIPTION OF THE DRAWINGS

In order to describe the technical solutions in the present disclosure more clearly, drawings needed to be used in the embodiments will be briefly introduced below. It is apparent that the drawings described below are merely some embodiments of the disclosure, and those skilled in the technical field further may obtain other drawings according to the drawings without making inventive efforts.
FIG. 1 is an explosion schematic structural diagram of a dustproof device according to the present disclosure.
FIG. 2 is a schematic structural diagram of a dust cover according to the present disclosure.
FIG. 3 is a schematic structural diagram of a locking claw according to the present disclosure.
FIG. 4 is a schematic structural diagram of an unlocking cam according to the present disclosure.
FIG. 5 is a schematic structural diagram of the dustproof device in an open position according to the present disclosure.
FIG. 6 is an internal schematic structural diagram of the dustproof device in an open position according to the present disclosure.
FIG. 7 is an internal schematic structural diagram of the dustproof device in an unlocking position according to the present disclosure.
FIG. 8 is a sectional schematic structural diagram of a charging device in a fastening position according to the present disclosure.
FIG. 9 is a sectional schematic structural diagram of the charging device in an open position according to the present disclosure.
FIG. 10 is a sectional schematic structural diagram of a charging gun head when it is inserted according to the present disclosure.
FIG. 11 is a sectional schematic structural diagram of the charging device in an unlocking position according to the present disclosure.
FIG. 12 is a schematic structural diagram of a rotating portion according to the present disclosure.

### DESCRIPTION OF THE EMBODIMENTS

The technical solutions in the embodiments of the present disclosure will be clearly and completely described below in combination with the drawings in the embodiments of the present disclosure. Apparently, the embodiments described are only some embodiments rather than all embodiments of the present disclosure. All other embodiments obtained by those of ordinary skill in the art based on the embodiments of this disclosure without inventive efforts shall fall within the protection scope of this disclosure.

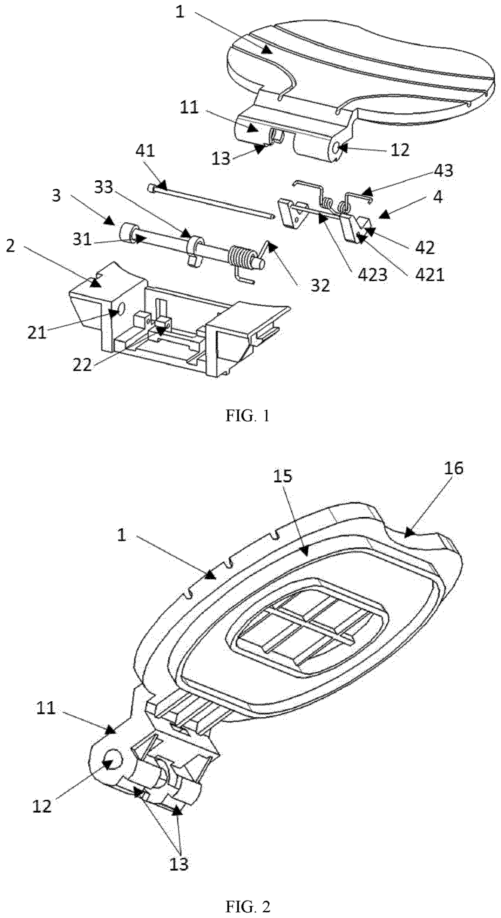

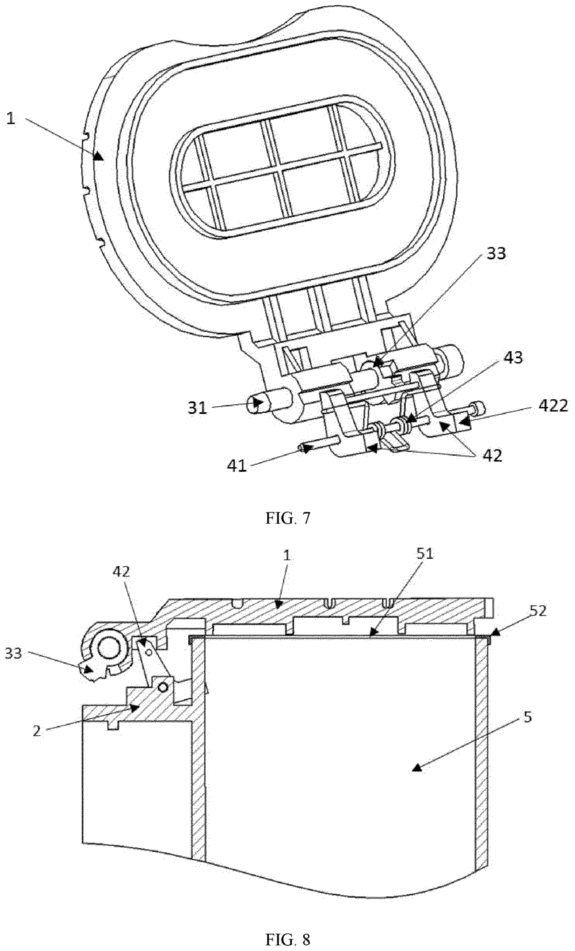

In an implementation, as shown in FIG. 2, the present disclosure provides a dustproof device having self-locking and rebounding functions, including a dust cover mounting support 2, a dust cover 1, a dust cover fixing mechanism 3, and a dust cover locking mechanism 4. The dust cover 1 is connected to the dust cover mounting support 2 through the dust cover fixing mechanism 3, and the dust cover 1 is driven by the dust cover fixing mechanism 3 to rotate to a fastening position. The dust cover locking mechanism 4 is mounted on the dust cover mounting support 2, and the dust cover locking mechanism 4 is in snap connection to the dust cover 1 to enable the dust cover 1 to be in an open position, and to prevent the dust cover 1 from rotating to the fastening position, as shown in FIGs. 8 to 11.

The dust cover 1 and the dust cover fixing mechanism 3 are movably connected, which can guarantee that the dust cover 1 moves relative to the dust cover fixing mechanism 3 to perform an opening action or an closing action, and therefore, the dust cover 1 is hinged to the dust cover mounting support 2 through the dust cover fixing mechanism 3. Besides, the existing dust cover 1 is connected to the charging socket through a connecting rope, the position of the dust cover 1 is uncertain after it is taken down, thus the operator needs to seek for, take, and confirm the fastening direction, which wastes time. The connecting rope of the dust cover 1 will also be worn during long-term use to be broken, resulting in missing of the dust cover 1, so that the waterproof and dustproof purposes for the charging socket cannot be achieved. To avoid the above situation, the dustproof device provided by the present disclosure is fixed on the charging socket body 5 in a hinged manner. The opening and fastening positions both are controlled by the dust cover rotating shaft 31 and the dust cover mounting support 2 to ensure fastening every time. The dust cover 1 will stably cover the charging socket port 51 to guarantee the waterproof and dustproof purposes for the charging socket.

Besides, the first spring 32 is provided on the dust cover fixing mechanism 3, and the dust cover fixing mechanism 3 is capable of making the dust cover 1 cover the charging socket port 51 under the action of the first spring 32, so that the action of manually covering the charging socket port 51 with the dust cover 1 is omitted, and therefore, time is saved and an operation is facilitated. A condition that the charging socket cannot be waterproof and dustproof as the dust cover 1 does not cover the charging socket port 51 to induce a short circuit and even a fire in case of severity because an operator forgets to fasten the dust cover 1 is avoided.

In a state that the dust cover 1 is opened, if there is no locking mechanism, the operator needs to keep the dust cover 1 open while inserting the charging plug head 6 into the charging socket body 5, which is inconvenient to operate and also causes a plugging failure. In the present disclosure, the dust cover locking mechanism 4 is provided. When the dust cover 1 is opened, the dust cover can be locked in the open position, and the operator can insert the charging gun head 6 with a single hand. Moreover, the dust cover locking mechanism 4 is provided with the unlocking support arm 422. When the charging gun head 6 is inserted, it will touch the unlocking support arm 422 to unlock the dust cover 1 from the open position. The dust cover 1 will rotate toward the fastening position under the action of the first spring 32 and leans against the charging gun head 6. After the charging is completed, the charging gun head 6 is pulled out, and the dust cover 1 will automatically rotate to the fastening position, i.e., the action of manually fastening the dust cover 1 is omitted, so that the condition that the operator forgets to cover the charging socket port 51 with the dust cover 1 can also be avoided.

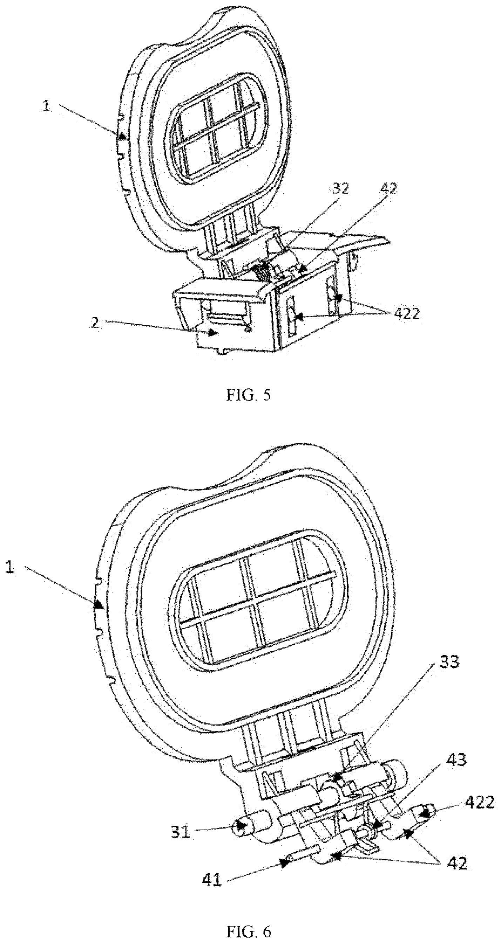

In an implementation, as shown in FIG. 5, an angle between a plane of the dust cover 1 in open position and the plane of the dust cover (1) in the fastening position is 81° to 99°. The dust cover 1 is fixed on the charging socket body 5 in a hinged manner. In order not to hinder insertion of the charging plug head 6, the dust cover 1 cannot cover the charging socket port 51 in the open position, and moreover, the open angle of the dust cover 1 cannot be too large. If the angle is too large, time of rotating the dust cover 1 from the open position to the fastening position will be prolonged, and the first spring 32 is over-stressed, shortening the service life.

To verify an influence of the angle between the plane of the dust cover 1 in the open position and the plane of the dust cover 1 in the fastening position on insertion of the charging gun head 6 and the service life of the dustproof device, the inventor makes a series of experiments, selecting the same dust covers 1 and the same dust cover fixing mechanisms 3, and different dust cover locking mechanisms 4, so that the angles between the planes of the dust covers 1 in the open position and the planes of the dust covers 1 in the fastening position are different. The insertion condition of the charging gun head 6 and the service life of the dustproof device are tested, and a test result is shown in table 1.

To test the insertion condition of the charging gun head 6, the charging gun head 6 is inserted into the charging socket body 5 when the plane of the dust cover 1 is at different angles between the open position and the fastening position and the number of times when the charging gun head cannot be inserted at one time is recorded. In the embodiment, in this test, the charging gun head is inserted 50 times at every angle, and if the number of times when the charging gun head cannot be inserted at one time is greater than 1, it is considered unqualified.

To test the service life of the dustproof device, the dust cover 1 is rotated from the fastening position to the open position, then the dust cover 1 is unlocked to rotate from the open position to the fastening position, and this action is a cycle, totally 5000 cycles being made. When the dustproof device is damaged, the number of cycles is recorded. In the embodiment, when the number of cycles is less than 4800, it is considered unqualified.

**Table 1: Influence of the angle between the plane of the dust cover 1 in the open position and the plane of the dust cover 1 in the fastening position on insertion of the charging gun head 6 and the service life of the dustproof device**

| The angle (°) between the plane of the dust cover 1 in the open position and the plane of the dust cover 1 in the fastening position | | | | | | | | | | | | | | |
|---|---|---|---|---|---|---|---|---|---|---|---|---|---|---|
| 80 | 81 | 88 | 89 | 90 | 91 | 92 | 93 | 94 | 95 | 96 | 97 | 99 | 100 | 105 |

| Number of times (time) when the charging gun head cannot be inserted at one time | | | | | | | | | | | | | | |
|---|---|---|---|---|---|---|---|---|---|---|---|---|---|---|
| 15 | 0 | 0 | 0 | 0 | 0 | 0 | 0 | 0 | 0 | 0 | 0 | 0 | 0 | 0 |

| Number of cycles (time) when the dustproof device is damaged | | | | | | | | | | | | | | |
|---|---|---|---|---|---|---|---|---|---|---|---|---|---|---|
| 5000 | 5000 | 5000 | 5000 | 5000 | 5000 | 5000 | 5000 | 4935 | 4911 | 4852 | 4831 | 4802 | 4786 | 4721 |

It can be seen from table 1 that when the angle between the plane of the dust cover 1 in the open position and the plane of the dust cover 1 in the fastening position is less than 81°, the number of times when the charging gun head 6 cannot be inserted at one time is greater than 1, which does not meet a required value. In this case, a normal charging operation cannot be performed, which will also bring complaints of the users. When the angle between the plane of the dust cover 1 in the open position and the plane of the dust cover 1 in the fastening position is greater than 99°, the number of cycles when the dustproof device is damaged is less than 4800, which does not meet a required value, and greatly shortens the service life of the dustproof device. Frequency maintenance and replacement of parts cause the waste of cost and the loss of time. Therefore, it is set by the inventor that the angle between the plane of the dust cover 1 in the open position and the plane of the dust cover 1 in the fastening position is 81° to 99°.

In an implementation, the dust cover mounting support 2 and the dust cover fixing mechanism 3 are integrally formed. The integrally formed design facilitates machining and reduces the assembling steps as well. The sufficient stability of the connection between the dust cover mounting support 2 and the dust cover fixing mechanism 3 can also be guaranteed when the dust cover is opened and closed frequently.

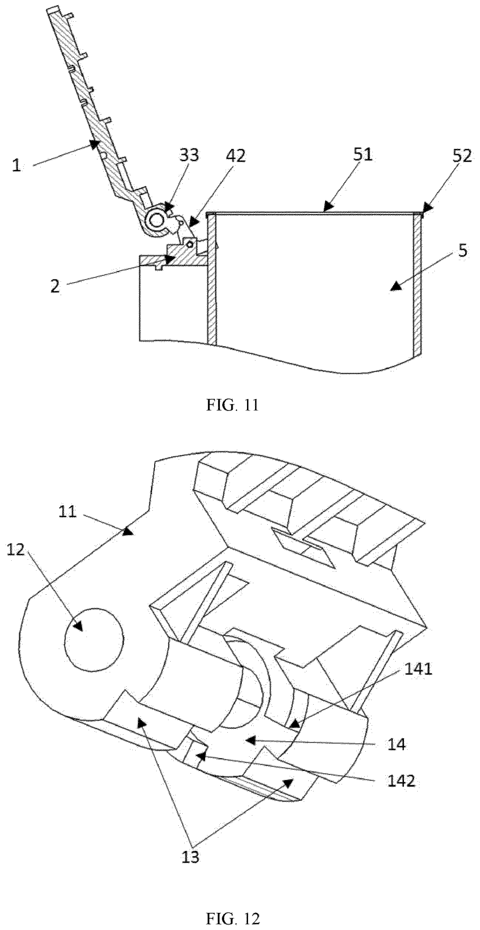

In an implementation, as shown in FIG. 1 and FIG. 12, a rotating portion 11 is provided on the dust cover 1; the rotating portion 11 is provided with a first axle hole 12 in an axial direction around which the dust cover 1 is rotatable; the dust cover fixing mechanism 3 includes a dust cover rotating shaft 31; a pin shaft or a pin bush 21 is provided on the dust cover mounting support 2; and the dust cover rotating shaft 31 passes through the first axle hole 12 and is mounted in the pin shaft or the pin bush 21, so that the dust cover 1 can rotate around the dust cover rotating shaft 31.

Most of the area of the dust cover 1 is used to cover the charging socket port 51. To enable the dust cover 1 to rotate to the open position or the fastening position, the rotating portion 11 is provided on one side of the dust cover 1, a fix portion is provided on the dust cover fixing mechanism 3, and the rotating portion 11 is hinged to the fix portion on the dust cover fixing mechanism 3, so that the dust cover 1 can rotate around the rotating portion 11.

Specifically, the rotating portion 11 is provided with the first axle hole 12 in the axial direction around which the dust cover 1 is rotatable; the dust cover rotating shaft 31 is provided on the dust cover fixing mechanism 3; the pin shaft or the pin bush 21 is provided on the dust cover mounting support 2; and the dust cover rotating shaft 31 passes through the first axle hole 12 and is mounted in the pin shaft or the pin bush 21, so that the dust cover 1 can rotate around the dust cover rotating shaft 31.

In an implementation, as shown in FIG. 1, the dust cover fixing mechanism 3 further includes a first spring 32; the first spring 32 is a torsional spring and is sleeved on the dust cover rotating shaft 31; a torsion arm at one end of the first spring 32 is fixed on the dust cover 1 and a torsion arm at the other end of the first spring 32 is fixed on the dust cover mounting support 2, to drive the dust cover 1 to rotate to the fastening position. To enable the dust cover 1 to rotate around the dust cover rotating shaft 31, the dust cover fixing mechanism 3 further includes the first spring 32. The first spring 32 may be the torsional spring. A center hole of the torsional spring is sleeved in the dust cover rotating shaft 31. The torsion arms at both ends of the torsional spring are respectively provided on the dust cover 1 and the dust cover mounting support 2. The dust cover 1 can rotate around the dust cover rotating shaft 31 depending on elasticity of the torsional spring itself. The first spring 32 can also be a linear spring or a rubber elastomer, of which both ends are respectively provided on the dust cover 1 and the dust cover mounting support 2. Depending on stretching elasticity, the dust cover 1 rotates around the dust cover rotating shaft 31. By changing the number of coils and diameter of the first spring 32, the elasticity of the first spring 32 can be increased or decreased, and moreover, the speed at which the dust cover 1 rotates around the dust cover rotating shaft 31 will also be controlled.

In an implementation, a stiffness range of the first spring 32 is 0.1 N.mm/° to 20N.mm/°. The stiffness of the first spring 32, also called an elastic coefficient, refers to an ability of a material or a structure resisting elastic deformation when being stressed. The greater the stiffness is, the less liable the first spring 32 deforms by force. Moreover, after deformation by force, the released elastic force is greater.

To verify an influence of the stiffness of the first spring 32 on a force to open the dust cover 1 and time that the dust cover 1 takes to rotate from the open position to the fastening position, the inventor makes a series of experiments, selecting the same dustproof devices and the same charging socket bodies 5 and first springs 32 with different stiffness in the dustproof device. Tests on the force to open the dust cover 1 and time that the dust cover 1 takes to rotate from the open position to the fastening position are respectively performed, and a test result is recorded in table 2.

To test the force to open the dust cover 1, a precision dynamometer is used. A force measurement device is fixed on the same position of a depression 15 on the dust cover 1, the dust cover 1 is rotated from the fastening position to the open position by applying a force perpendicular to the plane of the dust cover 1 all the time, and the maximum value of the tested force is recorded. In the embodiment, the maximum value of the force when the dust cover 1 is opened does not exceed 35 N.

To test the time that the dust cover 1 takes to rotate from the open position to the fastening position, a timer is used, the process of the dust cover 1 unlocked from the open position and completely rotating to the fastening position is observed, and the time spent is recorded. In the embodiment, the time that the dust cover 1 takes to rotate from the open position to the fastening position less than or equal to 5 s is a qualified value.

**Table 2: Influence of the stiffness of the first spring 32 on a force to open the dust cover 1 and time that the dust cover 1 takes to rotate from the open position to the fastening position**

| Stiffness of the first spring 32 (N.mm/°) | | | | | | | | | | | | | | |
|---|---|---|---|---|---|---|---|---|---|---|---|---|---|---|
| 0.01 | 0.05 | 0.1 | 0.5 | 1 | 3 | 5 | 7 | 10 | 13 | 15 | 17 | 20 | 23 | 25 |

| Force to open the dust cover 1 (N) | | | | | | | | | | | | | | |
|---|---|---|---|---|---|---|---|---|---|---|---|---|---|---|
| 5 | 7 | 9 | 12 | 16 | 18 | 20 | 22 | 25 | 27 | 29 | 32 | 35 | 37 | 41 |

| Time (S) that the dust cover 1 takes to rotate from the open position to the fastening position | | | | | | | | | | | | | | |
|---|---|---|---|---|---|---|---|---|---|---|---|---|---|---|
| 5.9 | 5.4 | 5.0 | 4.7 | 4.4 | 4.1 | 3.8 | 3.5 | 3.2 | 2.9 | 2.6 | 2.3 | 2.0 | 1.7 | 1.4 |

It can be seen from table 2 that when the stiffness of the first spring 32 is less than 0.1 N.mm/°, a force required to open the dust cover 1 is small. However, the time that the dust cover 1 takes to rotate from the open position to the fastening position is greater than 5 s, which does not meet a required value. The time to close the dust cover 1 is long, and the user needs to wait for long time to confirm that the dust cover 1 is closed. In addition, when there are no people to confirm, in the long closing time, foreign matters or rainwater will enter the charging socket body 5, so that the dust cover 1 does not play the waterproof role and dustproof role. Besides, there may be foreign matters preventing the dust cover 1 from being fastened to the charging socket port 51, resulting in a short-circuit failure of the charging socket body 5 after water ingress, which will induce a combustion event in case of severity. When the stiffness of the first spring 32 is greater than 20 N.mm/°, the time that the dust cover 1 takes to rotate from the open position to the fastening position is very short. However, the required force to open the dust cover 1 is greater than 35 N, which does not meet a required value. The force to open the dust cover 1 is large, and the user needs to exert a large force to open the dust cover 1, which will cause complaints of the user. Moreover, when the stiffness of the first spring 32 is too great, the force applied by the first spring 32 to the dust cover 1 and the dust cover mounting support 2 is also great. Long-term use will cause wear or damage of the dust cover 1 and the dust cover mounting support 2, so that the service life of the dustproof device is shortened.

In an implementation, as shown in FIGs. 1 to 3, a locking groove 13 is provided on the rotating portion 11; a locking claw 42 is provided on the dust cover locking mechanism 4; and when the locking claw 42 is in snap connection in the locking groove 13, the dust cover 3 is in the open position. To enable the dust cover 3 to be fixed at the open position and insert the charging gun head 6 conveniently into the charging socket body 5, the locking claw 42 is provided on the dust cover locking mechanism 4, and the locking claw 42 is in snap connection fit with the locking groove 13 in the rotating portion 11 to prevent the rotating portion 11 from rotating around the dust cover rotating shaft 31.

In an implementation, as shown in FIG. 1, FIG. 6, and FIG. 7, a locking pin shaft or a locking pin bush 22 is provided on the dust cover mounting support 2; the dust cover locking mechanism 4 includes a locking claw rotating shaft 41; the locking claw 42 is provided with a second axle hole 421 in a direction parallel to an axial direction around which the dust cover 1 is rotatable; and the locking claw rotating shaft 41 passes through the second axle hole 421 and is mounted in the locking pin shaft or the locking pin bush 22, so that the locking claw 42 is capable of rotating around the locking claw rotating shaft 41. To enable the locking claw 42 to be in snap connection to the locking groove 13 anytime, the front end of the locking claw 42 necessarily has a tendency of moving toward the locking groove 13. Therefore, the locking pin shaft or the locking pin bush 22 is provided on the dust cover mounting support 2. The second axle hole 421 is provided on the locking claw 42. The dust cover locking mechanism 4 includes the locking claw rotating shaft 41. The locking claw rotating shaft 41 passes through the second axle hole 421 and is mounted in the locking pin shaft or the locking pin bush 22, so that the locking claw 42 can rotate around the locking claw rotating shaft 41. The locking claw rotating shaft 41 and the dust cover rotating shaft 31 are provided in parallel. The front end of the locking claw 42 leans against the rotating portion 11. After the locking groove 13 in the rotating portion 11 rotates to the position of the front end of the locking claw 42, the front end of the locking claw 42 will enter the locking groove 13 and is clamped on the side wall of the locking groove 13, to prevent the dust cover 1 from rotating to the fastening position.

In an implementation, as shown in FIG. 1, FIG. 6, and FIG. 7, the dust cover locking mechanism 4 further includes a second spring 43; the second spring 43 is a torsional spring and is sleeved on the locking claw rotating shaft 41; a torsion arm at one end of the torsional spring is fixed on the dust cover mounting support 1 and a torsion arm at the other end of the torsional spring is fixed on the locking claw 42, to drive the locking claw 42 to rotate toward the rotating portion 11. The locking claw 42 has a tendency of rotating toward the rotating portion 11. When the locking groove 13 in the rotating portion 11 rotates to the position of the front end of the locking claw 42, the front end of the locking claw 42 will enter the locking groove 13 to prevent the dust cover 1 from rotating to the fastening position. This tendency is provided by the second spring 43 in the dust cover locking mechanism 4. The second spring 43 may be the torsional spring. A center hole of the torsional spring is sleeved in the locking claw rotating shaft 41. The torsion arms at both ends of the torsional spring are respectively provided on the locking claw 42 and the dust cover mounting support 2. The locking claw 42 can rotate around the locking claw rotating shaft 41 depending on elasticity of the torsional spring itself. The second spring 43 may also be a linear spring or a rubber elastomer. Both ends of the second spring are respectively provided on the locking claw 42 and the dust cover mounting support 2. Depending on stretching elasticity, the locking claw 42 rotates around the locking claw rotating shaft 41. By changing the number of coils and diameter of the second spring 43, the elasticity of the second spring 43 can be increased or decreased, and moreover, the speed at which the locking claw 42 rotates around the locking claw rotating shaft 41 will also be controlled.

In an implementation, a stiffness range of the second spring 43 is 0.1 N.mm/° to 20N.mm/°. The stiffness of the second spring 43, also called an elastic coefficient, refers to an ability of a material or a structure resisting elastic deformation when being stressed. The greater the stiffness is, the less liable the second spring 43 deforms by force. Moreover, after deformation by force, the released elastic force is greater.

To verify an influence of the stiffness of the second spring 43 on the number of times when the locking claw 42 is not in snap connection to the locking groove 13 and the plugging number of times when the charging gun head 6 fails to unlock, the inventor makes a series of experiments, selecting the same dustproof devices, the same charging gun heads 6, and the same charging socket bodies 5, and second springs 43 with different stiffness in the dustproof device. Tests on the number of times when the locking claw 42 is not in snap connection to the locking groove 13 and the plugging number of times when the charging gun head 6 fails to unlock are respectively performed, and a test result is recorded in table 3.

To test the number of times when the locking claw 42 is not in snap connection to the locking groove 13, the dust cover 1 is repeatedly opened and fastened for 1000 cycles, and the number of times when the locking claw 42 is not in snap connection to the locking groove 13 is recorded. In the embodiment, the number of times when the locking claw 42 is not in snap connection to the locking groove 13 less than or equal to 5 is a qualified value.

To test the plugging number of times when the charging gun head 6 fails to unlock, the charging gun head 6 is inserted into the dustproof device in the open position, so that the locking claw 42 is unlocked, for tests for 5000 times. The plugging number of times when the charging gun head 6 fails to unlock is observed. In the embodiment, the plugging number of times when the charging gun head 6 fails to unlock greater than 4500 is qualified.

**Table 3: Influence of the stiffness of the second spring 43 on the number of times when the locking claw 42 is not in snap connection to the locking groove 13 and the plugging number of times when the charging gun head 6 fails to unlock**

| Stiffness of the second spring 43 (N.mm/°) | | | | | | | | | | | | | | |
|---|---|---|---|---|---|---|---|---|---|---|---|---|---|---|
| 0.01 | 0.05 | 0.1 | 0.5 | 1 | 3 | 5 | 7 | 10 | 13 | 15 | 17 | 20 | 23 | 25 |

| Number of times (time) when the locking claw 42 is not in snap connection to the locking groove 13 | | | | | | | | | | | | | | |
|---|---|---|---|---|---|---|---|---|---|---|---|---|---|---|
| 12 | 7 | 3 | 1 | 0 | 0 | 0 | 0 | 0 | 0 | 0 | 0 | 0 | 0 | 0 |

| Plugging number of times (time) when the charging gun head 6 fails to unlock | | | | | | | | | | | | | | |
|---|---|---|---|---|---|---|---|---|---|---|---|---|---|---|
| 5000 | 5000 | 5000 | 5000 | 5000 | 5000 | 5000 | 4953 | 4892 | 4788 | 4672 | 4594 | 4517 | 4382 | 4216 |

It can be seen from table 3 that when the stiffness of the second spring 43 is less than 0.1 N.mm/°, the plugging number of times when the charging gun head 6 fails to unlock meets a requirement. However, the number of times when the locking claw 42 is not in snap connection to the locking groove 13 is greater than 5, which does not meet a required value. In this case, the force through which the locking claw 42 is in snap connection to the locking groove 13 is small, there is a condition that the locking claw 42 cannot be in snap connection to the locking groove 13, and the dust cover 1 can be in the open position through snap connection for many times. When the stiffness of the second spring 43 is greater than 20N.mm/°, the number of times when the locking claw 42 is not in snap connection to the locking groove 13 meets a required value. However, the plugging number of times when the charging gun head 6 fails to unlock is less than 4500, which does not meet a required value. The force through which the locking claw 42 is in snap connection to the locking groove 13 is large, the force applied to unlock is large as well. Because to unlock the locking claw 42 needs to touch the locking claw 42 after the charging gun head 6 is inserted, when the force to unlock the locking claw 42 is large, on the one hand, it is arduous to insert the charging gun head 6, which results in complaints of the user, and moreover, due to long-term friction between the charging gun head 6 and the locking claw 42, the reaction force applied by the locking claw 42 to the charging gun head 6 is large, which results in wear of the charging gun head 6 and the locking claw 42. After wear to a certain extent, the locking claw 42 is not unlocked after the charging gun head 6 is inserted. The dust cover 1 will be in the open position all the time, which cannot play the waterproof role and dustproof role.

Furthermore, when the stiffness of the second spring 43 is too great, the force applied by the second spring 43 to the locking claw 42 and the dust cover mounting support 2 is large as well. Long-term use leads to wear or damage of the locking claw 42 and the dust cover mounting support 2, so that the service life of the dustproof device is shortened.

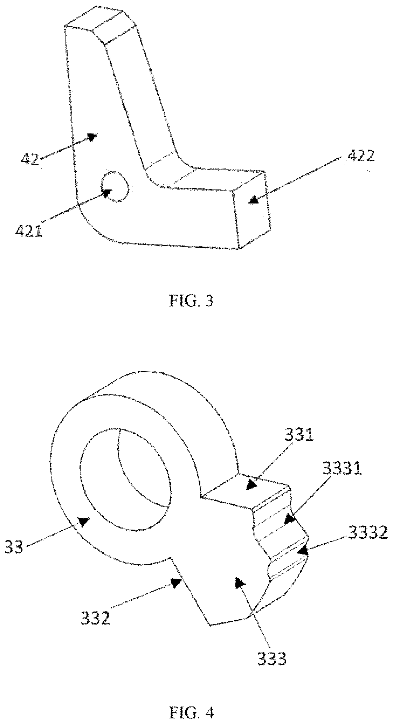

In an implementation, as shown in FIG. 3 and FIG. 5, the locking claw 42 is further provided with an unlocking support arm 422 in a position close to the locking claw rotating shaft 41; one end of the unlocking support arm 422 is fixed on the locking claw 42 and the other end thereof is a free end; and the locking claw 42 can be separated from the locking groove 13 by pressing the free end of the unlocking support arm 422. To enable the charging gun head 6 to unlock the locking claw 42 after being inserted, it is needed to additionally provide a transmission device between the charging gun head 6 and the locking claw 42. By means of the lever principle, by providing the unlocking support arm 422 in the position of the locking claw 42 close to the locking claw rotating shaft 41, when the charging gun head 6 is inserted, the side wall of the charging gun head 6 touches the free end of the unlocking support arm 422. The locking claw 42 is pried by a lever, so that the front end of the locking claw 42 is separated from the locking groove 13, and therefore, the dust cover 1 is driven by the first spring 32 to rotate from the open position to the fastening position.

In an implementation, as shown in FIG. 3, a plane where the locking claw 42 and the unlocking support arm 422 are located is axially perpendicular to the locking claw rotating shaft 41. The locking claw 42 separated from the locking groove 13 moves in the direction axially perpendicular to the locking claw rotating shaft 41. Similarly, to provide the locking claw 42 with the force in this direction, the plane where the unlocking support arm 422 at the other end of the lever is located and the plane where the locking claw 42 is located are axially perpendicular to the locking claw rotating shaft 41 to guarantee that the torque transferred from the unlocking support arm 422, which can enable the locking claw 42 from being separated from the locking groove 13.

In an implementation, as shown in FIG. 3, an included angle between the locking claw 42 and the unlocking support arm 422 is 60° to 120°. In a case that the length and position of the locking claw 42 and the unlocking support arm 422 are fixed, the smaller the included angle between the locking claw 42 and the unlocking support arm 422 is, the length extended from the dust cover mounting support 2 is, so does the area in contact with the charging gun head 6. To verify the influence of the included angle between the locking claw 42 and the unlocking support arm 422 on the plugging number of times when the charging gun head 6 fails to unlock, the inventor makes a series of experiments, selecting the same dustproof devices, the same charging gun heads 6, and the same charging socket bodies 5, same length and position of the locking claws 42 and the unlocking support arms 422, and different included angles between the locking claws 42 and the unlocking support arms 422 for testing the plugging number of times when the charging gun head 6 fails to unlock, and a result is recorded in table 4.

To test the plugging number of times when the charging gun head 6 fails to unlock, the charging gun head 6 is inserted into the dustproof device in the open position, so that the locking claw 42 is unlocked, for tests for 5000 times. The plugging number of times when the charging gun head 6 fails to unlock is observed. In the embodiment, the plugging number of times when the charging gun head 6 fails to unlock greater than 4500 is qualified.

**Table 4: Influence of the included angle between the locking claw 42 and the unlocking support arm 422 on the plugging number of times when the charging gun head 6 fails to unlock**

| Included angle (°) between the locking claw 42 and the unlocking support arm 422 | | | | | | | | | | |
|---|---|---|---|---|---|---|---|---|---|---|
| 40 | 50 | 60 | 70 | 80 | 90 | 100 | 110 | 120 | 130 | 140 |

| Plugging number of times (time) when the charging gun head 6 fails to unlock | | | | | | | | | | |
|---|---|---|---|---|---|---|---|---|---|---|
| 4109 | 4466 | 4893 | 4952 | 5000 | 5000 | 5000 | 4963 | 4617 | 4482 | 4116 |

It can be seen from table 4 that when the included angle between the locking claw 42 and the unlocking support arm 422 is less than 60° or greater than 120°, the plugging number of times when the charging gun head 6 fails to unlock is less than 4500 times, which does not meet the required value. This is because the contact area between the unlocking support arm 422 and the charging gun head 6 is too small. When the fit tolerance between the charging gun head 6 and the charging socket body 5 is great, the charging gun head 6 cannot be in contact with the unlocking support arm 422 or the contact area is small, so that the locking claw 42 cannot be separated from the locking groove 13, resulting in failure to unlock the charging gun head 6. Besides limitation on the included angle between the locking claw 42 and the unlocking support arm 422, the length of the unlocking support arm 422 may also be increased, so that the contact area between the unlocking support arm 422 and the charging gun head 6 is enlarged. However, this will increase the manufacturing cost of the unlocking support arm 422. Moreover, the too long unlocking support arm 422 will break due to large torque after long-term use, so that the unlocking effect to the dustproof device is lost. Therefore, the inventor selects the included angle between the locking claw 42 and the unlocking support arm 422 at 60° to 120°.

In an implementation, as shown in FIG. 5, a free end of an unlocking support arm 422 protrudes out of the side surface of the dust cover mounting support 2. The side surface of the dust cover mounting support 2 is also the side surface of an inner cavity of the charging socket body 5. To enable the charging gun head 6 to be in contact with the free end of the unlocking support arm 422, the free end of the unlocking support arm 422 needs to protrude out of the side surface of the dust cover mounting support 2. When the charging gun head 6 is inserted, it can be in contact with the free end of the unlocking support arm 422. An unlocking hole is provided on the side surface of the dust cover mounting support 2. The free end of the unlocking support arm 422 can rotate freely in the unlocking hole. If there are a plurality of unlocking support arms 422, there will be a plurality of corresponding unlocking holes.

In an implementation, as shown in FIG. 1, FIG. 4, FIG. 6, FIG. 7, and FIG. 12, the dust cover rotating shaft 31 is further provided with an unlocking cam 33; the unlocking cam 33 and the dust cover rotating shaft 31 are coaxial; the unlocking cam 33 is provided with a first side surface 331 and a second side surface 332 both of which are in a radial direction; a groove 14 is provided on the rotating portion 11; a first baffle 141 and a second baffle 142 are provided in the groove 14 in a radial direction; an angle between the first baffle 141 and the second baffle 142 is greater than an angle between the first side surface 331 and the second side surface 332; the first baffle 141 is constructed to push the first side surface 331 to rotate; and the second baffle 142 is constructed to push the second side surface 332 to rotate in a reverse direction. When the user opens the dust cover 1 to the open position but not needs to insert the charging gun head 6, another method is needed to unlock the locking claw 42, so that the locking claw 42 is separated from the locking groove 13. In the present disclosure, the groove 14 is provided on the rotating portion 11, the unlocking cam 33 is provided on the dust cover rotating shaft 31, the unlocking cam 33 can be inserted into the groove 14 and rotate around the axis of the dust cover rotating shaft 31, the first side surface 331 and the second side surface 332 are provided on a protruding portion of the unlocking cam 33, and the first baffle 141 and the second baffle 142 are provided in the groove 14 in the radial direction. When the dust cover 1 is opened to the open position, the groove 14 in the rotating portion 11 follows rotation, and the second baffle 142 pushes the second side surface 332 to rotate. When the dust cover 1 rotates from the open position to the fastening position, the first baffle 141 pushes the first side surface 331 to rotate. The included angle between the first baffle 141 and the second baffle 142 is larger than the included angle between the first side surface 331 and the second side surface 332. Therefore, when the rotating direction of the dust cover 1 is changed, the unlocking cam 33 will stop rotating for a period of time.

In an implementation, as shown in FIG. 1, FIG. 4, FIG. 6, FIG. 7, and FIG. 12, a distance between a plane of the first baffle 141 and a top end of the locking claw 42 is greater than or equal to a distance between a snap connection plane of the locking groove 13 and the top end of the locking claw 42. That is, a slotting range of the locking groove 13 is between the included angles between the first baffle 141 and the second baffle 142. When the second baffle 142 is in contact with the second side surface 332, the unlocking cam 33 does not affect snap connection between the locking claw 42 and the locking groove 13. When the groove 14 in the rotating portion 11 drives the unlocking cam 33 to rotate to the unlocking position, it can push the locking claw 42 in snap connection in the locking groove 13 out. When the rotating portion 11 rotates to the fastening position, the unlocking cam 33 will pause under the action of the locking claw 42, and makes the front end of the locking claw 42 cross the locking groove 13 till the groove 14 in the rotating portion 11 drives the unlocking cam 33 to rotate after the first baffle 141 is in contact with the first side surface 331. The front end of the locking claw 42 is in lap joint to the rotating portion 11, so that the dust cover 1 is no longer locked.

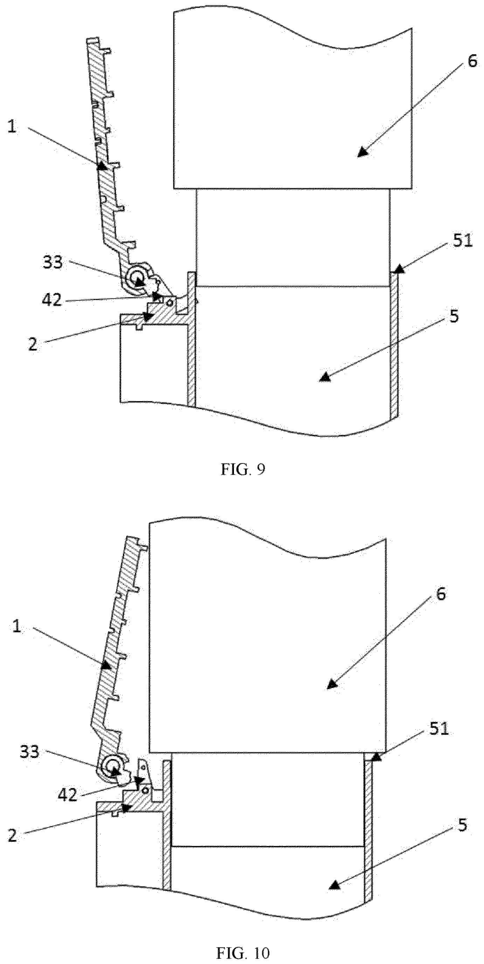

In an implementation, as shown in FIG. 1, FIG. 4, FIG. 6, FIG. 7, and FIG. 12, the unlocking cam 33 is further provided with an unlocking protrusion 333; and the unlocking protrusion 333 is constructed to rotate around the dust cover rotating shaft 31 and to push the locking claw 42 to be separated from the locking groove 13. As described above, the unlocking cam 33 pushes the locking claw 42 in snap connection in the locking groove 13 out depending on the unlocking protrusion 333 provided on the unlocking cam 33. The protruding surface of the unlocking protrusion 333 protrudes out of the surface of the rotating portion 11, as shown in FIG. 8. When the dust cover 1 is in the fastening position, the unlocking protrusion 333 is not in contact with the locking claw 42, as shown in FIG. 9. When the dust cover 1 is in the open position, the unlocking protrusion 333 is in contact with the locking claw 42 but does not push the locking claw 42 to be separated from the locking groove 13, as shown in FIG. 11. When the dust cover 1 is in the unlocking position, the unlocking protrusion 333 pushed by the second baffle 142 of the groove 14 separates the locking claw 42 from the locking groove 13, and in this case, the dust cover 1 will return to the fastening position under the action of the first spring 32. The unlocking protrusion 333 will keep a state where the locking claw 42 is separated from the locking groove 13 till the front end of the locking claw 42 crosses the locking groove 13. The unlocking protrusion 333 pushed by the first baffle 141 of the groove 14 separates from the locking claw 42 to return to the original position, and the locking claw 42 will also in lap joint to the surface of the rotating portion 11 continuously. After the dust cover 1 is opened next time, the locking claw 42 is in snap connection in the locking groove 13 continuously, so that the dust cover 1 is in the open position.

In an implementation, as shown in FIG. 4, the unlocking protrusion 333 is further provided with a claw slot 3331; the locking claw 42 is capable of being matched with the claw slot 3331, enabling the unlocking cam 33 and the locking claw 42 to be kept in relative positions, and enabling the locking claw 42 to be separated from the claw slot 3331 when the unlocking protrusion 333 rotates to a preset angle. To enable the unlocking protrusion 333 to be capable of keeping the state where the locking claw 42 is separated from the locking groove 13 when the dust cover 1 rotates to the fastening position from the unlocking position, the claw slot 3331 is provided on the unlocking protrusion 333, the locking claw 42 will be in snap connection in the claw slot 3331, the unlocking protrusion 333 not follow rotation of the rotating portion 11 is kept, and till the front end of the locking claw 42 crosses the locking groove 13, the unlocking protrusion 333 pushed by the first baffle 141 of the groove 14 will be separated from the locking claw 42 to return to the original position. When the unlocking protrusion 333 rotates to the preset angle, the side of the claw slot 3331 will no longer limit the front end of the locking claw 42, so that the front end of the locking claw 42 is separated from the claw slot 3331.

In an implementation, as shown in FIG. 11, a rotating angle of the dust cover 1 from the open position to an unlocking position at which the unlocking protrusion 333 pushes the locking claw 42 to be separated from the locking groove 13 is 5° to 20°. When it is unable to unlock by using the charging gun head 6, the user only needs to rotate the dust cover 1 in the open position toward the unlocking position and the locking claw 42 is pushed through the unlocking protrusion 333 to be separated from the locking groove 13, and in this case, the rotating angle of the dust cover 1 is 5° to 20°. If the angle is too small, it is not enough to enable the unlocking protrusion 333 to push the locking claw 42 to be separated from the locking groove 13. If the angle is too large, the forces of the dust cover 1 and the dust cover mounting support 2 subjected to the first spring 32 are too large, which is easy to cause damage.

To verify an influence of the rotating angle of the dust cover 1 from the open position to the unlocking position on the number of times when the dustproof device cannot be unlocked and the number of times when the dustproof device is damaged, the inventor makes a series of experiments, selecting the same dustproof devices, the same charging gun heads 6, and the same charging socket bodies 5 and different rotating angles of the dust cover 1 from the open position to the unlocking position for testing the number of times when the dustproof device cannot be unlocked and the number of times when the dustproof device is damaged, and a result is recorded in table 5.

To test the number of times when the dustproof device cannot be unlocked, the dust cover 1 is rotated from the open position to the unlocking position, then the dust cover 1 returns to the fastening position freely, and this action is taken as a cycle, totally 1000 cycles being done. The number of times when the dust cover is clamped in the open position by the locking claw 42 in the process is recorded. In the embodiment, the number of times when the dustproof device cannot be unlocked is greater than 5, which is unqualified.

To test the service life of the dustproof device, the dust cover 1 is rotated from the open position to the unlocking position, then the dust cover 1 is rotated to the open position from the unlocking position, and this action is taken as a cycle, totally 5000 cycles being done. When the dustproof device is damaged, the number of cycles is recorded. In the embodiment, the number of cycles is less than 4800, which is unqualified.

**Table 5: Influence of the rotating angle of the dust cover 1 from the open position to the unlocking position on the number of times when the dustproof device cannot be unlocked and the number of times when the dustproof device is damaged**

| Rotating angle (°) of the dust cover 1 from the open position to the unlocking position | | | | | | | | | | | | | |
|---|---|---|---|---|---|---|---|---|---|---|---|---|---|
| 1 | 3 | 5 | 6 | 8 | 10 | 12 | 14 | 16 | 18 | 19 | 20 | 22 | 24 |

| Number of times when the dustproof device cannot be unlocked (time) | | | | | | | | | | | | | |
|---|---|---|---|---|---|---|---|---|---|---|---|---|---|
| 9 | 6 | 2 | 1 | 0 | 0 | 0 | 0 | 0 | 0 | 0 | 0 | 0 | 0 |

| Number of cycles (time) when the dustproof device is damaged | | | | | | | | | | | | | |
|---|---|---|---|---|---|---|---|---|---|---|---|---|---|
| 5000 | 5000 | 5000 | 5000 | 5000 | 5000 | 5000 | 5000 | 5000 | 5000 | 4963 | 4848 | 4703 | 4621 |

It can be seen from table 5 that when the rotating angle of the plane of the dust cover 1 from the open position to the unlocking position is less than 5°, the number of times when the dustproof device cannot be unlocked is greater than 5, which does not meet a required value. In this case, the dust cover 1 cannot return to the fastening position normally and will be in snap connection in the open position again, which will bring complaints of the users. When the rotating angle of the plane of the dust cover 1 from the open position to the unlocking position is greater than 20°, the number of cycles when the dustproof device is damaged is less than 4800, which does not meet a required value, and greatly shortens the service life of the dustproof device. In this case, frequency maintenance and replacement of parts cause the waste of cost and the loss of time. Therefore, the inventor sets the rotating angle of the dust cover from the open position to the unlocking position at 5° to 20°.

In an implementation, as shown in FIG. 1, FIG. 6, and FIG. 7, the dust cover locking mechanism 4 further includes a connecting rod 423; the connecting rod 423 is connected to a plurality of locking claws 42; and the unlocking protrusion 333 is constructed to push the connecting rod 423 and to drive the plurality of locking claws 42 to be separated from the locking groove 13. To guarantee firm snap connection of the dust cover 1 by the locking claw 42, there are a plurality of locking claws 42 and a plurality of the corresponding locking grooves 13, so that the dust cover 1 can be more stably supported, and therefore, a condition that the dust cover 1 damages the locking claws 42 or the locking grooves 13 under the action of the first spring 32 or when the dust cover 1 is subjected to an external force is avoided. When there are the plurality of locking claws 42 and the plurality of the corresponding locking grooves 13, there shall be the plurality of grooves 14 and the plurality of unlocking cams 33 of the rotating portion. In this case, the mechanism is too complex, and there will be problems of machining difficulty and assembling difficulty and easy damage. Therefore, the inventor provides the connecting rods 423 on the top ends of the plurality of locking claws 42 to connect the plurality of locking claws 42 to act synchronously. The unlocking cam 33 no longer pushes the single locking claw 42 but the connecting rod 423. The connecting rod 423 drives the plurality of locking claws 42 to rotate and to be separated from the plurality of locking grooves 13.

In an implementation, as shown in FIG. 4, the unlocking protrusion 333 is further provided with a connecting rod slot 3332; the connecting rod 423 is capable of being matched with the connecting rod slot 3332 and enabling the unlocking cam 33 to follow rotation; and the depth of the connecting rod slot 3332 is less than the radius of a section of the connecting rod 423.

To enable the unlocking protrusion 333 to be capable of keeping the state where the locking claw 42 is separated from the locking groove 13 when the dust cover 1 rotates to the fastening position from the unlocking position, the connecting rod slot 3332 is provided on the unlocking protrusion 333, the connecting rod 423 will be in snap connection in the connecting rod slot 3332 and is capable of keeping the unlocking protrusion 333 not follow rotation of the rotating portion 11, and till the front end of the locking claw 42 crosses the locking groove 13, the unlocking protrusion 333 pushed by the first baffle 141 of the groove 14 will be separated from the locking claw 42 to return to the original position. When the unlocking protrusion 333 rotates to the preset angle, the side of the connecting rod slot 3332 will no longer limit the front end of the connecting rod 423, so that the front end of the connecting rod 423 is separated from the connecting rod slot 3332.

In an implementation, there is at least one locking groove 13 and at least one locking claw 42, and the locking grooves and the locking claws are arranged correspondingly. The locking claw 42 is in snap connection to the corresponding locking groove 13, so that the dust cover 1 is fixed on the open position. There is at least one locking groove 13 and at least one locking claw 42. One longer locking groove 13 can correspond to the plurality of locking claws 42. However, each of locking claws is necessarily arranged corresponding to the locking grooves 13, so that the locking claws 42 are in snap connection to the corresponding locking grooves 13.

In an implementation, when there are a plurality of locking grooves 13 and a plurality of locking claws 42, the locking grooves 13 and locking claws 42 are arranged correspondingly and are symmetrically arranged about a middle position of the dust cover rotating shaft 31. When there is one locking groove 13 and one locking claw 42, which are usually provided in the middle position of the dust cover rotating shaft 31. Thus, the force of the dust cover 1 for rotating toward the fastening position can be applied to the locking groove 13 and locking claw 42 evenly. If the locking groove 13 and locking claw 42 are provided on one side of the dust cover rotating shaft 31, besides the force of the dust cover 1 for rotating toward the fastening position, a relative twisting force is further provided. When the dust cover 1 is rotated many times, the locking groove 13 and locking claw 42 will be easily damaged, resulting in a shortened service life of the dustproof device. When there are a plurality of locking grooves 13 and a plurality of locking claws 42, to enable the force borne by the locking grooves 13 and locking claws 42 to be even, the plurality of locking grooves 13 and the plurality of locking claws 42 will be symmetrically arranged about the middle position of the dust cover rotating shaft 31.

The present disclosure further provides a charging device, as shown in FIGs. 8 to 11, including a charging socket body 5, a charging gun head 6, and the above dustproof device having self-locking and rebounding functions, in which a charging socket port 51 is provided on the charging socket body 5; the charging gun head 6 is in plug connection to the charging socket port 51in a matching manner; a dust cover 1 is fixed on the charging socket body 5; and in a fastening position, the dust cover 1 covers the charging socket port 51.

To charge a battery of an electric automobile, the charging gun head 6 needs to be plugged to the charging socket body 5 in a matched manner in a common circumstance, so that the charging gun head 6 is connected to a terminal inside the charging socket body 5 and is conductive, to connect a power supply with the battery of the automobile, thereby achieving charging of the electric automobile. Because the charging socket body 5 is usually in an external environment, the charging socket body 5 is easily affected by dust and rainwater, which will corrode the terminal and even cause a short circuit of a charging circuit to initiate combustion of the charging socket body 5. Therefore, waterproof and dustproof protections are needed for the charging socket body 5. The charging socket body 5 is provided with the charging socket port 51 in the position where it is plugged with the charging gun head 6, and the dustproof device having self-locking and rebounding functions performs waterproof and dustproof protections on the charging socket port 51.

In the present disclosure, by using the spring to drive the dust cover 1, the dust cover 1 and the charging socket port 51 not need to be manually fastened, and the dust cover 1 can be self-locked at the open position, so that it is easy to insert the charging gun head 6 into the charging socket port 51. The dust cover 1 at the open position can be unlocked through the charging gun head 6 and is automatically fastened to the charging socket port 51 after the charging gun head 6 is pulled out. Alternatively, the dust cover 1 can be manually opened to an unlocking position, and the dust cover 1 rebounds automatically and is fastened at the charging socket port 51.

In an implementation, as shown in FIG. 2 and FIG. 8, the charging socket port 51 is provided with a seal ring 52; a corresponding boss 15 is provided on the dust cover 1; and when the dust cover 1 is in the fastening position, the seal ring 52 is in snap fit with the boss 15, so that the charging socket port 51 is sealed. The dust cover 1 is in seal fit with the seal ring 52 on the charging socket port 51 to seal the charging socket body 5, which achieves the waterproof and dustproof purposes. Of course, the seal ring may also be provided on the dust cover 1 and is in seal fit with the charging socket port 51. Under the action of the first spring 32, the dust cover 1 will rotate to the fastening position. The boss 15 is provided on the dust cover 1, is capable of being in close fit with the seal ring 52, and enables the seal ring 52 made of a rubber material to deform by extrusion, thereby achieving a sealing purpose.

In an implementation, as shown in FIG. 2, the dust cover 1 is provided with a depression 16 in a position corresponding to the rotating portion 11; and the depression 16 is provided at a preset distance from the charging socket port 51, so that the dust cover 1 is capable of being manually rotated. When the dust cover 1 is fastened to the charging socket port 51 and the user needs to perform a charging operation, he/she needs to open the dust cover 1 from the fastening position to the open position. As the dust cover 1 is in seal fit with the charging socket port 51, if the edge of the dust cover 1 is completely fitted with the charging socket port 51, the user cannot open the dust cover 1 smoothly. Therefore, the inventor provides the depression 16 on the dust cover 1, the depression 16 and the rotating portion 11 are located on both sides of the dust cover 1, and the depression 16 does not completely fit the charging socket port 51 with a distance through which a finger applies a force. It is convenient for the user to open the dust cover 1 easily, and the dust cover is capable of being rotated to the open position.

In an implementation, as shown in FIG. 6 and FIG. 9, the dust cover 1 rotates from the fastening position to the open position and the dust cover 3 is fixed on the open position till the locking claw 42 in snap connection in the locking groove 13. In a state that the dust cover 1 is opened, if there is no locking mechanism, the operator needs to keep the dust cover 1 open while inserting the charging plug head 6 into the charging socket body 5, which is inconvenient to operate and also causes a plugging failure. In the present disclosure, the dust cover locking mechanism 4 is provided. When the dust cover 1 is opened, it can be locked in the open position, and the operator can insert the charging gun head 6 with a single hand. To enable the dust cover 3 to be fixed on the open position and insert the charging gun head 6 conveniently into the charging socket body 5, the locking claw 42 is provided on the dust cover locking mechanism 4, and is in snap connection fit with the locking groove 13 on the rotating portion 11 to prevent the rotating portion 11 from rotating around the dust cover rotating shaft 31. Moreover, the angle of the dust cover 3 fixed on the open position is 90° to 95°, which is convenient for the charging gun head 6 to be inserted into the charging socket body 5 smoothly.

In an implementation, as shown in FIG. 7 and FIG. 10, the free end of the unlocking support arm 422 protrudes out of the side surface of the dust cover mounting support 2 and is located in the charging socket port 51; when inserted into the charging socket port 51, the charging gun head 6 pushes the free end of the unlocking support arm 422 to drive the locking claw 42 to be separated from the locking groove 13; and the dust cover 1 is driven by the first spring 32 to rotate to the fastening position. To enable the charging gun head 6 to unlock the locking claw 42 after the charging gun head 6 being inserted, it is needed to additionally provide a transmission device between the charging gun head 6 and the locking claw 42. By means of the lever principle, by providing the unlocking support arm 422 in the position of the locking claw 42 close to the locking claw rotating shaft 41, and the free end of the unlocking support arm 422 protrudes out of the side surface of the dust cover mounting support 2 and is located in the charging socket port 51. When the charging gun head 6 is inserted, the side wall of the charging gun head 6 touches the free end of the unlocking support arm 422. The locking claw 42 is pried by a lever, so that the front end of the locking claw 42 is separated from the locking groove 13, and therefore, the dust cover 1 is driven by the first spring 32 to rotate from the open position to the fastening position.

As shown in FIG. 10, when the charging gun head 6 is inserted, the unlocking support arm 422 is unlocked. The dust cover 1 is driven by the first spring 32 to rotate. However, the charging gun head 6 is still in the charging socket body 5, and in this case, the dust cover 1 will lean against the side edge of the charging gun head 6 without affecting the normal charging operation. After charging is completed, the user pulls the charging gun head 6 out, and in this case, the dust cover 1 driven by the first spring 32 leans against the charging gun head 6 without affecting the pull-out operation of the charging gun head 6. When the charging gun head 6 is completely pulled out, the dust cover 1 which is not blocked will be driven by the first spring 32 to rotate to the fastening position.

In an implementation, as shown in FIG. 11, the dust cover 1 rotates from the open position to the unlocking position, the second baffle 142 pushes the second side surface 332 to drive the unlocking cam 33 to rotate, and the unlocking protrusion 333 pushes the locking claw 42 to be separated from the locking groove 13; when the dust cover 1 rotates from the unlocking position to the fastening position, the locking claw 42 pushes the claw slot 3331 to drive the unlocking cam 33 to rotate in a reverse direction till the first baffle 141 blocks the first side surface 331 and the unlocking cam 33 cannot rotate; the locking claw 42 is separated from the locking groove 13 and is in lap joint to the rotating portion 11; and the dust cover 1 is driven by the first spring 32 to rotate to the fastening position. The unlocking cam 33 pushes the locking claw 42 in snap connection in the locking groove 13 out depending on the unlocking protrusion 333 provided on the unlocking cam 33. The protruding surface of the unlocking protrusion 333 protrudes out of the surface of the rotating portion 11, as shown in FIG. 8. When the dust cover 1 is in the fastening position, the unlocking protrusion 333 is not in contact with the locking claw 42, as shown in FIG. 9. When the dust cover 1 is in the open position, the unlocking protrusion 333 is in contact with the locking claw 42 but does not push the locking claw 42 to be separated from the locking groove 13, as shown in FIG. 11. When the dust cover 1 is in the unlocking position, the unlocking protrusion 333 is pushed by the second baffle 142 of the groove 14 to separate the locking claw 42 from the locking groove 13, and in this case, the dust cover 1 will return to the fastening position under the action of the first spring 32. The unlocking protrusion 333 will keep a state where the locking claw 42 is separated from the locking groove 13 till the front end of the locking claw 42 crosses the locking groove 13. The unlocking protrusion 333 is pushed by the first baffle 141 of the groove 14 to be separated from the locking claw 42 to return to the original position, and the locking claw 42 will also in lap joint to the surface of the rotating portion 11 continuously. After the dust cover 1 is opened next time, the locking claw 42 is in snap connection in the locking groove 13 continuously, so that the dust cover 1 is in the open position.

In another implementation, the connecting rods 423 are provided at the top ends of the plurality of locking claws 42 to connect the plurality of locking claws 42 to act synchronously. The unlocking cam 33 no longer pushes the single locking claw 42 but the connecting rod 423. The connecting rod 423 drives the plurality of locking claws 42 to rotate and to be separated from the plurality of locking grooves 13. To enable the unlocking protrusion 333 to be capable of keeping the state where the locking claw 42 is separated from the locking groove 13 when the dust cover 1 rotates to the fastening position from the unlocking position, the connecting rod slot 3332 is provided on the unlocking protrusion 333, the connecting rod 423 will be in snap connection in the connecting rod slot 3332 and is capable of keeping the unlocking protrusion 333 not follow rotation of the rotating portion 11, and till the front end of the locking claw 42 crosses the locking groove 13, the unlocking protrusion 333 is pushed by the first baffle 141 of the groove 14 to be separated from the locking claw 42 to return to the original position. When the unlocking protrusion 333 rotates to the preset angle, the side of the connecting rod slot 3332 will no longer limit the front end of the connecting rod 423, so that the front end of the connecting rod 423 is separated from the connecting rod slot 3332.

In the present disclosure, the dust cover 1 is driven by using the spring without manual fastening, and the dust cover can be self-locked at the open position, so that the charging gun head 6 is easily inserted into a charging socket port 51. The dust cover 1 can be unlocked through the charging gun head 6 and is automatically fastened after the charging gun head 6 is pulled out. Alternatively, the dust cover 1 can also be manually opened to an unlocking position, so that the dust cover rebounds automatically and is fastened at the charging socket port 51.

The above is merely several embodiments of the present disclosure. Those skilled in the art may make various modifications or variations to the embodiments of the present disclosure according to the disclosed content of the application document without departing from the spirit and scope of the present disclosure.

## Claims

1. A dustproof device having self-locking and rebounding functions, comprising a dust cover mounting support (2), a dust cover (1), a dust cover fixing mechanism (3), and a dust cover locking mechanism (4), wherein the dust cover (1) is connected to the dust cover mounting support (2) through the dust cover fixing mechanism (3), and the dust cover (1) is driven by the dust cover fixing mechanism (3) to rotate to a fastening position; and the dust cover locking mechanism (4) is mounted on the dust cover mounting support (2), and the dust cover locking mechanism (4) is in snap connection to the dust cover (1) to enable the dust cover (1) to be in an open position and to prevent the dust cover (1) from rotating to the fastening position.

2. The dustproof device according to claim 1, wherein an angle between a plane of the dust cover (1) in the open position and the plane of the dust cover (1) in the fastening position is 81° to 99°.

3. The dustproof device according to claim 1, wherein the dust cover mounting support (2) and the dust cover fixing mechanism (3) are integrally formed.

4. The dustproof device according to claim 1, wherein a rotating portion (11) is provided on the dust cover (1); the rotating portion (11) is provided with a first axial hole (12) in an axial direction around which the dust cover (1) is rotatable; the dust cover fixing mechanism (3) comprises a dust cover rotating shaft (31); a pin shaft or a pin bush (21) is provided on the dust cover mounting support (2); and the dust cover rotating shaft (31) passes through the first axial hole (12) and is mounted in the pin shaft or the pin bush (21), so that the dust cover (1) is capable of rotating around the dust cover rotating shaft (31).

5. The dustproof device according to claim 4, wherein the dust cover fixing mechanism (3) further comprises a first spring (32); the first spring (32) is a torsional spring and is sleeved on the dust cover rotating shaft (31); a torsion arm at one end of the first spring (32) is fixed on the dust cover (1) and a torsion arm at the other end of the first spring (32) is fixed on the dust cover mounting support (2), to drive the dust cover (1) to rotate to the fastening position.

6. The dustproof device according to claim 5, wherein a stiffness range of the first spring (32) is 0.1 N.mm/° to 20 N.mm/°.

7. The dustproof device according to claim 4, wherein a locking groove (13) is provided on the rotating portion (11); a locking claw (42) is provided on the dust cover locking mechanism (4); and when the locking claw (42) is in snap connection in the locking groove (13), the dust cover (3) is in the open position.

8. The dustproof device according to claim 7, wherein a locking pin shaft or a locking pin bush (22) is provided on the dust cover mounting support (2); the dust cover locking mechanism (4) comprises a locking claw rotating shaft (41); the locking claw (42) is provided with a second axial hole (421) in a direction parallel to an axial direction around which the dust cover (1) is rotatable; and the locking claw rotating shaft (41) passes through the second axial hole (421) and is mounted in the locking pin shaft or the locking pin bush (22), so that the locking claw (42) is capable of rotating around the locking claw rotating shaft (41).

9. The dustproof device according to claim 8, wherein the dust cover locking mechanism (4) further comprises a second spring (43); the second spring (43) is a torsional spring and is sleeved on the locking claw rotating shaft (41); a torsion arm at one end of the torsional spring is fixed on the dust cover mounting support (1) and a torsion arm at the other of the torsional spring end is fixed on the locking claw (42), to drive the locking claw (42) to rotate toward the rotating portion (11).

10. The dustproof device according to claim 9, wherein a stiffness range of the second spring is 0.1 N.mm/° to 20 N.mm/°.

11. The dustproof device according to claim 8, wherein the locking claw (42) is further provided with an unlocking support arm (422) in a position close to the locking claw rotating shaft (41); one end of the unlocking support arm (422) is fixed on the locking claw (42) and the other end thereof is a free end; and the locking claw (42) is capable of being separated from the locking groove (13) by pressing the free end of the unlocking support arm (422).

12. The dustproof device according to claim 11, wherein a plane where the locking claw (42) and the unlocking support arm (422) are located is axially perpendicular to the locking claw rotating shaft (41).

13. The dustproof device according to claim 11, wherein an included angle between the locking claw (420 and the unlocking support arm (422) is 60° to 120°.

14. The dustproof device according to claim 11, wherein the free end of the unlocking support arm (422) protrudes out of a side surface of the dust cover mounting support (2).

15. The dustproof device according to claim 7, wherein the dust cover rotating shaft (31) is further provided with an unlocking cam (33); the unlocking cam (33) and the dust cover rotating shaft (31) are coaxial; the unlocking cam (33) is provided with a first side surface (331) and a second side surface (332) in a radial direction; a groove (14) is provided on the rotating portion (11); a first baffle (141) and a second baffle (142) are provided in the groove (14) in a radial direction; an angle between the first baffle (141) and the second baffle (142) is greater than an angle between the first side surface (131) and the second side surface (132); the first baffle (141) is constructed to push the first side surface (131) to rotate; and the second baffle (142) is constructed to push the second side surface (132) to rotate in a reverse direction.

16. The dustproof device according to claim 15, wherein a distance between a plane of the first baffle (141) and a top end of the locking claw (42) is greater than or equal to a distance between a snap connection plane of the locking groove (13) and the top end of the locking claw (42).

17. The dustproof device according to claim 16, wherein the unlocking cam (33) is further provided with an unlocking protrusion (333); and the unlocking protrusion (333) is constructed to rotate around the dust cover rotating shaft (31) and to push the locking claw (42) to be separated from the locking groove (13).

18. The dustproof device according to claim 17, wherein the unlocking protrusion (333) is further provided with a claw slot (3331); the locking claw (42) is capable of being matched with the claw slot (3331), enabling the unlocking cam (33) and the locking claw (42) to be kept in relative positions, and enabling the locking claw (42) to be separated from the claw slot (3331) when the unlocking protrusion (333) rotates to a preset angle.

19. The dustproof device according to claim 17, wherein a rotating angle of the dust cover (1) from the open position to an unlocking position at which the unlocking protrusion (333) pushes the locking claw (42) to be separated from the locking groove (13) is 5° to 20°.

20. The dustproof device according to claim 17, wherein the dust cover locking mechanism (4) further comprises a connecting rod (423); the connecting rod (423) is connected to a plurality of locking claws (423); and the unlocking protrusion (333) is constructed to push the connecting rod (423) and to drive the plurality of locking claws (42) to be separated from the locking groove (13).

21. The dustproof device according to claim 20, wherein the unlocking protrusion (333) is further provided with a connecting rod slot (3332); the connecting rod (423) is capable of being matched with the connecting rod slot (3332) and enabling the unlocking cam (33) to follow rotation; and the depth of the connecting rod slot (3332) is less than the radius of a section of the connecting rod (423).

22. The dustproof device according to claim 7, wherein there is at least one locking groove (13) and at least one locking claw (42), and the locking groove and the locking claw are arranged correspondingly.

23. The dustproof device according to claim 20, wherein when there are a plurality of locking grooves (13) and a plurality of locking claws (42), the locking grooves (13) and locking claws (42) are arranged correspondingly and are symmetrically arranged about a middle position of the dust cover rotating shaft (31).

24. A charging device, comprising a charging socket body (5), a charging gun head (6), and the dustproof device having self-locking and rebounding functions according to any one of claims 1 to 23, wherein a charging socket port (51) is provided on the charging socket body (5); the charging gun head (6) is in plug connection to the charging socket port (51) in a matching manner; a dust cover (1) is fixed on the charging socket body (5); and in a fastening position, the dust cover (1) covers the charging socket port (51).

25. The charging device according to claim 24, wherein the charging socket port (51) is provided with a seal ring (52); a corresponding boss (15) is provided on the dust cover (1); and when the dust cover (1) is in the fastening position, the seal ring (52) is in snap fit with the boss (15), so that the charging socket port (51) is sealed.

26. The charging device according to claim 24, wherein the dust cover (1) is provided with a depression (16) in a position corresponding to a rotating portion (11); and the depression (16) is provided at a preset distance from the charging socket port (51), so that the dust cover (1) is capable of being manually rotated.

27. The dustproof device according to claim 24, wherein the dust cover (1) rotates from the fastening position to the open position and the dust cover (1) is fixed on the open position till a locking claw (42) in snap connection in the locking groove (13).

28. The charging device according to claim 27, wherein a free end of an unlocking support arm (422) protrudes out of the side surface of the dust cover mounting support (2) and is located in the charging socket port (51); when inserted into the charging socket port (51), the charging gun head (6) pushes the free end of the unlocking support arm (422) to drive the locking claw (42) to be separated from the locking groove (13); and the dust cover (1) driven by a first spring (32) rotates to the fastening position.

29. The charging device according to claim 27, wherein the dust cover (1) rotates from an open position to an unlocking position, the second baffle (142) pushes the second side surface (332) to drive an unlocking cam (33) to rotate, and an unlocking protrusion (333) pushes the locking claw (42) to be separated from the locking groove (13); when the dust cover (1) rotates from the unlocking position to the fastening position, the locking claw (42) pushes the claw slot (3331) to drive the unlocking cam (33) to rotate in a reverse direction till a first baffle (141) blocks the first side surface (331) and the unlocking cam (33) cannot rotate; the locking claw (42) is separated from the locking groove (13) and is in lap joint to the rotating portion (11); and the dust cover (1) driven by the first spring rotates to the fastening position.
